# EUROPÄISCHE PATENTANMELDUNG

(11) **EP 0 761 941 A1**
(43) Veröffentlichungstag der Anmeldung: **12.03.1997**
(21) Anmeldenummer: 96112603.4
(22) Anmeldetag: 05.08.1996
(51) Int. Cl.: F01P 11/12, B60K 11/08

(54) **Lufteinzugssystem für ein Fahrzeug**

(30) Priorität: 11.08.1995 US 514330
(71) Anmelder: DEERE & COMPANY, Moline Illinois 61265-8098 (US)
(72) Erfinder: Wykhuis, Lloyd Arnold, Mayville, Wisconsin 53050 (US); Wanie, Lee Joseph, Horicon, Wisconsin 53031 (US); Nickles, Daniel Robert, Hewitt, New Jersey 07421 (US)
(74) Vertreter: Feldmann, Bernhard

(57) **Zusammenfassung**

Bei einem Lufteinzugssystem (12) für ein Fahrzeug (10) mit einem Siebgitter (16) und einem hinter dem Siebgitter (16) angeordneten und durch das Siebgitter (16) abgedeckten Luftleitungssystem (18) mit einem Luftauslaß (20), wobei das Siebgitter (16) eine Einströmfläche, durch die Luft angesaugt wird, und das Luftleitungssystem (18) einen Einströmungsquerschnitt aufweist, ist das Luftleitungssystems (18) derart gestaltet, daß der Einströmungsquerschnitt des Luftleitungssystems (18) an einer besonderen Stelle hinter dem Siebgitter (16) der Einströmfläche des Siebgitters (16) zwischen dieser Stelle und einem Ende des Siebgitters (16) entspricht bzw. angenähert ist.

## Beschreibung

Die Erfindung bezieht sich auf ein Lufteinzugssystem für ein Fahrzeug mit einem Siebgitter und einem hinter dem Siebgitter angeordneten und durch das Siebgitter abgedeckten Luftleitungssystem mit einem Luftauslaß, wobei das Siebgitter eine Einströmfläche, durch die Luft angesaugt wird, und das Luftleitungssystem einen Einströmungsquerschnitt aufweist.

Wassergekühlte Verbrennungsmotore sind in der Regel luftgekühlten Kühlem zugeordnet, um die Motortemperatur zu regeln. Damit ist eine beträchtliche Luftmenge ständig erforderlich, um den Kühler und das in ihm umlaufende Wasser zu kühlen.

Wenn derartige Fahrzeuge zum Beispiel als Sitzrasenmäher, also als Fahrzeuge für den Rasenschnitt ausgebildet sind, so besteht die Gefahr, daß die Kühlluft besonders stark mit Staub, Pollen, Grasstücken oder ähnlichem Fremdmaterial durchsetzt ist. Dieses kann den Kühler bzw. dessen Rippen leicht zusetzen, so daß die erforderliche Kühlleistung nicht mehr erbracht wird und der Motor sich überhitzt. Ein häufiges Reinigen ist jedenfalls immer erforderlich. Auch besteht die Gefahr, daß die Elektrik des Fahrzeuges oder mechanische Steuerteile diesem Fremdmaterial ausgesetzt ist bzw. sind. In solchen Fällen kann dadurch geholfen werden, daß die Luft durch ein vorgeschaltetes Sieb eingesaugt wird. Dies ist auch der Fall bei dem Lufteinsaugsystem, von dem die Erfindung ausgeht und das an einem Aufsitzrasenmäher Verwendung findet. Derartige Fahrzeuge haben jedoch eine gedrungene Bauweise und die Kühlluft wird durch ein Luftleitungssystem eingesaugt, das sich in der Regel an den beiden Fahrzeugseiten befindet. Ein Beispiel für ein derartiges System - allerdings ohne Siebgitter - ist in dem Dokument US-A-5 193 636 zu finden. Befindet sich dann der Verbrennungsmotor bei derartigen Fahrzeugen noch am rückwärtigen Fahrzeugteil, so sind die Platzverhältnisse noch beengter, und der Raum für das Luftleitungssystem wird noch durch Fahrzeugbauteile, wie Rahmenteile, Gehäuseabschnitte etc. weiter eingeschnürt. Die Bauteile können bis dicht an das Siebgitter heranreichen. Ein ungleichmäßiger Lufteinzug ist die Folge, so daß an dem Siebgitter Fremdmaterialanhäufungen auftreten können. Hierdurch wird das Sieb zugesetzt und eine Überhitzung des Motors ist zu befürchten. In jedem Fall ist wiederum ein häufiges Reinigen erforderlich.

Die mit der Erfindung zu lösende Aufgabe wird darin gesehen, Lufteinzugssysteme, die die Luft durch ein Siebgitter einziehen, derart auszubilden, daß das Siebgitter nicht zu Verstopfungen neigt. Die Erfindung sieht daher eine derartige Gestaltung des Luftleitungssystems vor, daß der Einströmungsquerschnitt des Luftleitungssystems an einer besonderen Stelle hinter dem Siebgitter der Einströmfläche des Siebgitters zwischen dieser Stelle und einem Ende des Siebgitters entspricht bzw. angenähert ist. Auf diese Weise wird eine relativ gleichmäßige Luftströmung bei einer relativ geringen Luftgeschwindigkeit angestrebt, wodurch ein schnelles Zusetzen des Siebgitters vermieden wird. Die Einströmfläche kann dabei als die Siebfläche definiert werden, durch die die Luft in das Leitungssystem eintreten kann und ist die Lochfläche, die sich zwischen der besonderen Stelle und dem dem Luftauslaß abgelegenen Ende des Siebgitters befindet. Der Einströmungsquerschnitt ist der offene oder die Luft durchlassende Querschnitt des Luftleitungssystems an der besonderen Stelle. Im Idealfall ist das Verhältnis von Einströmungsquerschnitt zur Einströmfläche zwischen dem Luftauslaß und dem dem Luftauslaß abgelegenen Ende des Siebgitters an allen Stellen zwischen Luftauslaß und Siebende 1:1. Das Luftleitungssystem hätte dann eine offene Kanalform, die mit Bezug auf den Luftauslaß keilförmig verläuft. Eine solche keilförmige Form wird angestrebt. Sie sollte frei von Einschnürungen sein, die wie Luftdüsen wirken.

Mit Rücksicht auf die Bauweise bei Rasentraktoren wird ferner für ein Lufteinzugssystem mit einem ersten und einem zweiten zwischen sich das Siebgitter aufnehmenden Endteil, vorgeschlagen, daß der Luftauslaß im Bereich des ersten Endteils vorgesehen ist.

Die Einströmfläche des Siebes wird durch die Anzahl und Größe der Sieböffnungen bestimmt, weshalb nach der Erfindung vorgeschlagen wird, daß die Sieböffnungen 36% oder etwa 36% der Siebgitteroberfläche ausmachen.

Das Luftleitungssystem weist einen unregelmäßigen Querschnitt auf und kann aus einem Kunststoff bestehen.

Der unregelmäßige Querschnitt erschwert das Idealverhältnis von 1:1, weshalb ein weiterer Vorschlag der Erfindung vorsieht, daß in dem Luftleitungssystem eine Leitfläche vorgesehen ist. Diese erstreckt sich etwa von einem Siebende bis etwa zur Siebmitte, so daß die Luft von beiden Siebenden zur Siebmitte gezogen wird. Vorteilhaft ist dabei die Leitfläche zwischen einer Rückwand des Luftleitungssystems und dem Siebgitter vorgesehen und mit ihrem einen Ende dem Auslaß zugelegen.

Wird nun im Bereich der Leitfläche oder der Leitwand das Luftleitungssystem durch Fahrzeugbauteile weiter eingeengt, so kann die Leitfläche mit einer Vielzahl von Durchgangsöffnungen versehen sein. Hierdurch wird die Luftdurchflußrate wieder erhöht.

Schließlich wird nach der Erfindung noch vorgeschlagen, daß der Einströmungsquerschnitt des Luftleitungssystems sich in Richtung auf seinen Luftauslaß ständig vergrößert, sofern er nicht durch ihn einschnürende Fahrzeugbauteile daran gehindert ist, wobei dann die Leitfläche im Luftleitungssystem oberhalb von das Luftleitungssystem einschnürenden Bauteilen vorgesehen sein kann.

In der Zeichnung ist ein nachfolgend näher erläutertes Ausführungsbeispiel der Erfindung dargestellt. Es zeigt:
- Fig. 1: ein in gestrichelten Linien angedeutetes Fahrzeug mit einem Lufteinzugssystem,
- Fig. 2: das Lufteinzugssystem in der Draufsicht,
- Fig. 3: das Lufteinzugssystem nach Fig. 2 in der Seitenansicht,
- Fig. 4 bis 12: Schnittbilder entsprechend der Schnittlinien 4 bis 12 in Fig. 3,
- Fig. 13: das Luftleitungssystem in perspektivischer Ansicht von vorne,
- Fig. 14: das Luftleitungssystem in perspektivischer Ansicht von hinten,
- Fig. 15: die Rückseite des Luftleitungssystems,
- Fig. 16: die Unterseite des Luftleitungssystems,
- Fig. 17: ein bekanntes Lufteinzugssystem im Schnitt und
- Fig. 18: das bekannte Luftleitungssystem nach Fig. 17 in Seitenansicht.

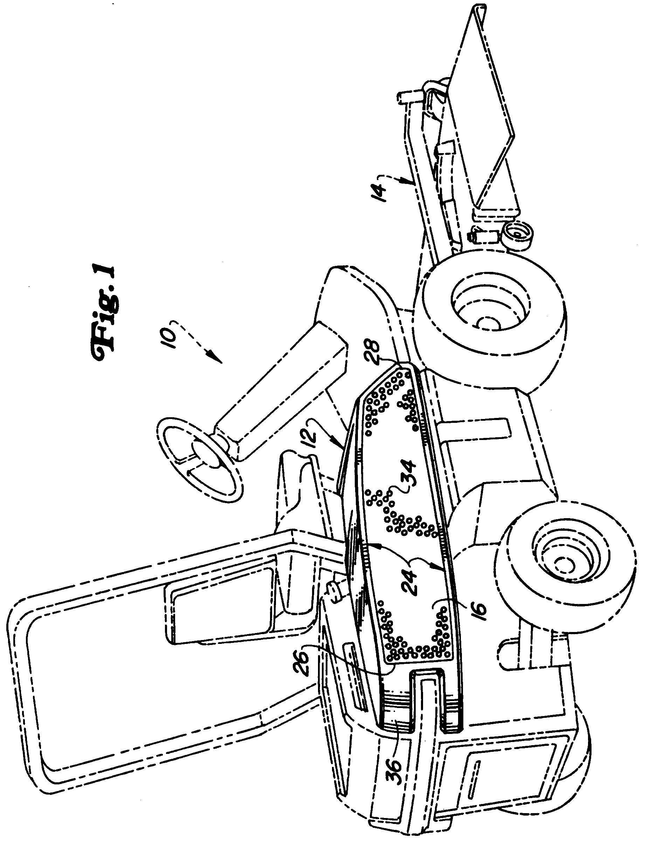

In Fig. 1 der Zeichnung ist ein selbstfahrendes Fahrzeug 10 in Form eines Aufsitzrasenmähers dargestellt, der mit einem nachfolgend noch im einzelnen zu beschreibenden Lufteinzugssystem 12 ausgerüstet sein kann. Ein derartiges System ist an beiden Seiten des Fahrzeugs für die Bereitstellung von Kühlluft vorgesehen. Nachfolgend wird aber nur das System an der rechten Seite beschrieben, da das an der linken Seite im wesentlichen spiegelbildlich ausgebildet ist.

Das Fahrzeug 10 ist in Fig. 1 lediglich in strichlierten Linien angedeutet, um die Umgebung des Lufteinzugssystems 12 zu veranschaulichen. In der Zeichnung ist nicht zu erkennen, daß das Fahrzeug mit einem Flüssigkeit gekühlten Verbrennungsmotor mit einem Kühler und einem Ventilator ausgestattet ist, der Luft durch das Siebgitter des Einzugssystems ansaugt.

Ein derartiges Lufteinzugssystem 12 ist besonders vorteilhaft bei solchen Fahrzeugen einzusetzen, die mit einem Mähgerät 14 mit umlaufenden Messern ausgerüstet sind. Bei dem gezeigten Ausführungsbeispiel befindet sich das Mähgerät 14 vorne vor dem Fahrzeug. Bei dem Mähen des Grases oder anderer Vegetation wird in jedem Fall Staub, Schmutz und/oder andere Fremdkörper werden aufgewirbelt, d. h. derartige Fahrzeuge arbeiten unter Bedingungen, bei denen mit Staub, Schmutz und/oder mit anderen Fremdkörpern angereicherte Luft durch das Siebgitter 16 des Lufteinzugssystems 12 ein- bzw. angesaugt wird. Das Lufteinzugssystem nach dem bevorzugten Ausführungsbeispiel ist derart konzipiert, daß die Luftgeschwindigkeit im Bereich des Siebgitters etwa 3,66 m/sec beträgt, damit eine möglichst geringe Ablagerung von Staub, Schmutz oder anderen Fremdkörpern an der Siebgitteroberfläche stattfindet.

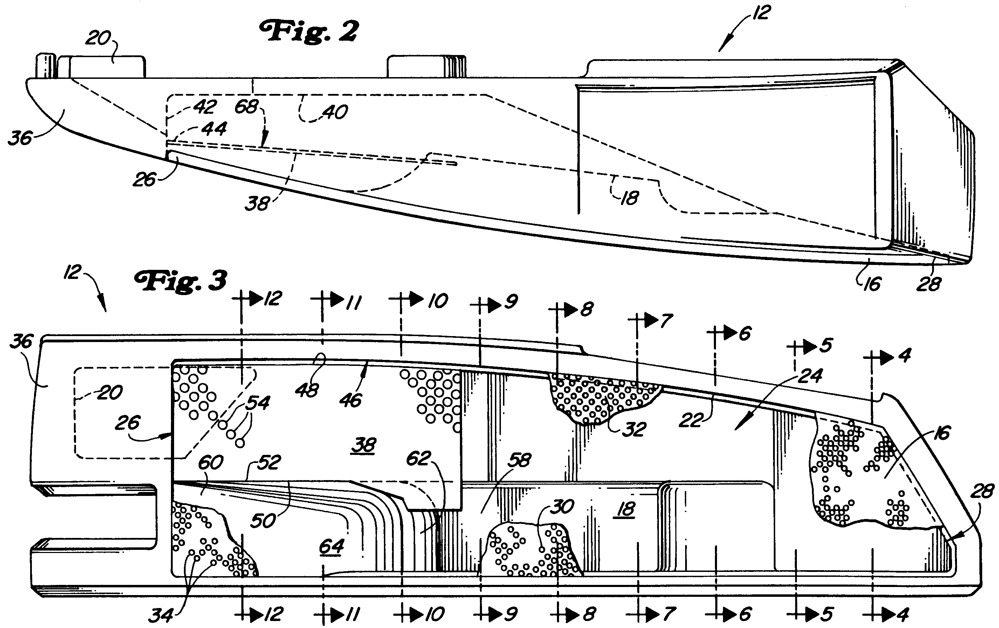

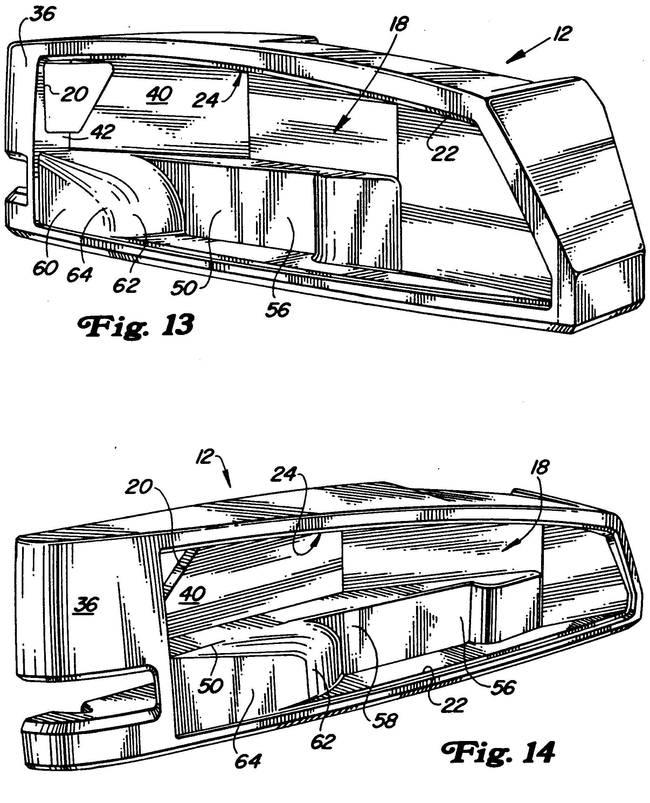

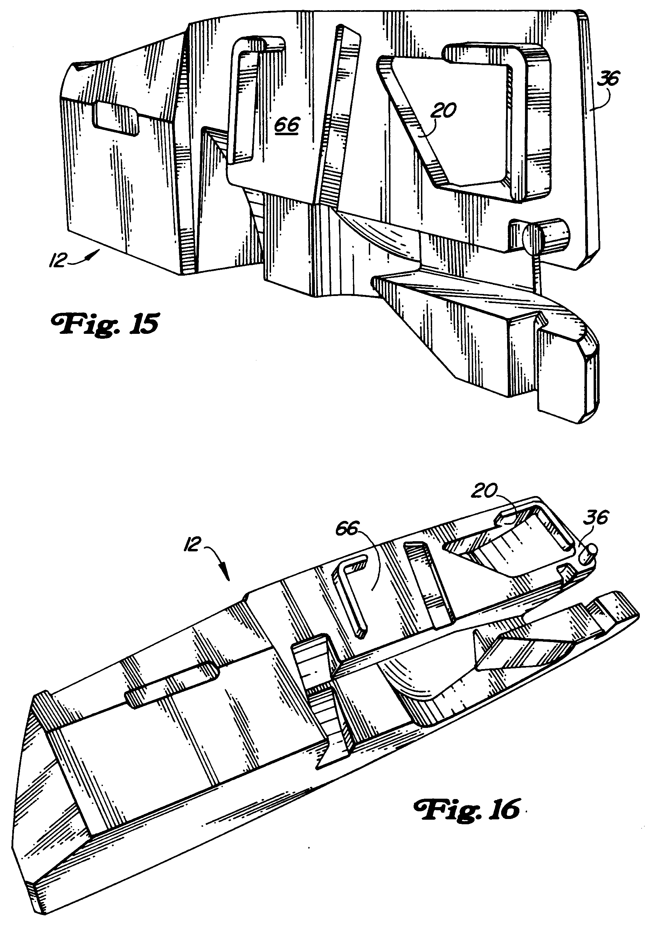

Fig. 2 zeigt das Lufteinzugssystem in der Draufsicht und Fig. 3 in der Seitenansicht, wobei allerdings Teile des Siebgitters 16 fortgelassen wurden, um das dahinter gelegene Leitungssystem 18 besser erkennen zu können. Das Leitungssystem 18 ist mit einem am rückwärtigen Ende des Einzugssystems 12 gelegenen Auslaß 20 versehen, und durch das Siebgitter 16 von dem Motorgebläse eingesaugte Luft wird durch das Leitungssystem zu dem Auslaß gelangen. Zusätzliche Ansichten des Einzugssystems 12 und seines Leitungssystems 18 gehen aus den Fig. 13 bis 16 hervor. Bei dem bevorzugten Ausführungsbeispiel ist das Lufteinzugssystem 12 bis auf sein Siebgitter 16 einstückig aus einem Kunststoff gegossen. Auf diese Weise läßt sich das Leitungssystem und die dieses begrenzenden Wände und Flächen leicht herstellen.

Bei dem bevorzugten Ausführungsbeispiel ist das Lufteinzugssystem 12 in länglicher Form ausgebildet, so daß einerseits eine relativ große Lufteintrittsfläche entsteht und andererseits die Fahrzeugseiten relativ niedrig gehalten werden können. Das Siebgitter 16 ist in einem Sitz 22 eingesetzt, der eine Sieböffnung 24 im Lufteinzugssystem 12 umläuft. Damit erstreckt sich das Siebgitter 16 in Längsrichtung zwischen einem ersten und einem zweiten Endteil 26 und 28 und vertikal zwischen einem Bodenabschnitt 30 und einem Dachabschnitt 32. Bei dem bevorzugten Ausführungsbeispiel ist das Siebgitter 16 mit Öffnungen 34 oder Perforationen versehen, die 36% der Siebfläche ausmachen, d. h. die Luft kann auf 36% der Siebfläche in das Leitungssystem eintreten. Dieser Prozentsatz kann natürlich je nach den Gegebenheiten variieren.

In dem rückwärtigen Abschnitt 26 des Einzugssystems im Bereich des Auslasses 20 ist eine Leitfläche 38 oder eine Leitwand vorgesehen. Sie liegt in etwa zwischen einer rückwärtigen Wand 40 des Leitungssystems 18 und dem Siebgitter 16, stößt mit ihrer einen Endkante 44 gegen eine Querseite 42 des Leitungssystems und liegt mit ihrem oberen Abschnitt 48 gegen eine Oberseite 46 des Leitungssystems und mit ihrem unteren Abschnitt 52 gegen eine Bodenseite 50 des Leitungssystems an. Auf die Aufgabe der Leitwand 38 wird später noch eingegangen.

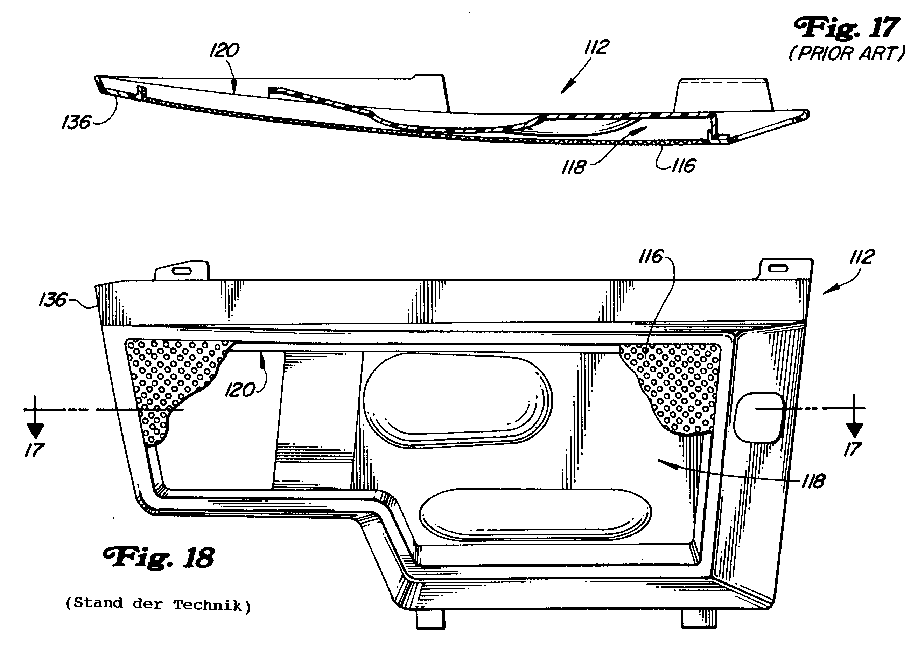

Mit dem bevorzugten Ausführungsbeispiel soll nicht nur eine geringe Luftgeschwindigkeit erreicht werden, sondern gleichfalls eine gleichmäßige Durchflußrate über die Länge und Breite des Siebgitters 16. Auf diese Weise wird das Siebgitter 16 weniger schnell verstopfen und eine gewünschte Luftströmung über längere Zeiträume sicherstellen, so daß letztlich die Wirtschaftlichkeit des Verbrennungsmotors bei geringeren Ausfallzeiten, die zum Entfernen von Fremdmaterial aus dem Siebgitter erforderlich waren, erhöht wird. Bei dem in den Fig. 17 und 18 gezeigten und zum Stand der Technik gehörenden Lufteinzugssystem 112 ist dies weniger der Fall. Dieses bekannte Lufteinzugssystem 112 ist zwar auch mit einem langgestreckten Siebgitter 116 versehen, doch ist das Leitungssystem 118 hinter dem Siebgitter 116 relativ schmal oder eng, was zu einem ungleichmäßigen Lufteinzug über die Sieblänge führt. Auch führt der Umstand, daß der Auslaß 120 an dem einen Ende 136 des Lufteinzugssystems vorgesehen ist, dazu, daß sich unmittelbar vor dem Siebabschnitt vor dem Auslaß befindliche Luft wesentlich schneller eingesaugt wird, so daß sich in diesem Bereich größere Anhäufungen von Fremdmaterialien finden lassen.

Im Gegensatz hierzu ist bei dem Lufteinzugssystem 12 nach dem bevorzugten Ausführungsbeispiel ein Leitungssystem 18 vorgesehen, dessen Einströmungsquerschnitt DCSA (Duct Cross-Sectional Open Area) sich dem Einströmungsquerschnitt SCSA (Screen Cross-Sectional Open Area) bzw. der zugehörigen Einströmfläche des Siebgitters 16 nähert.

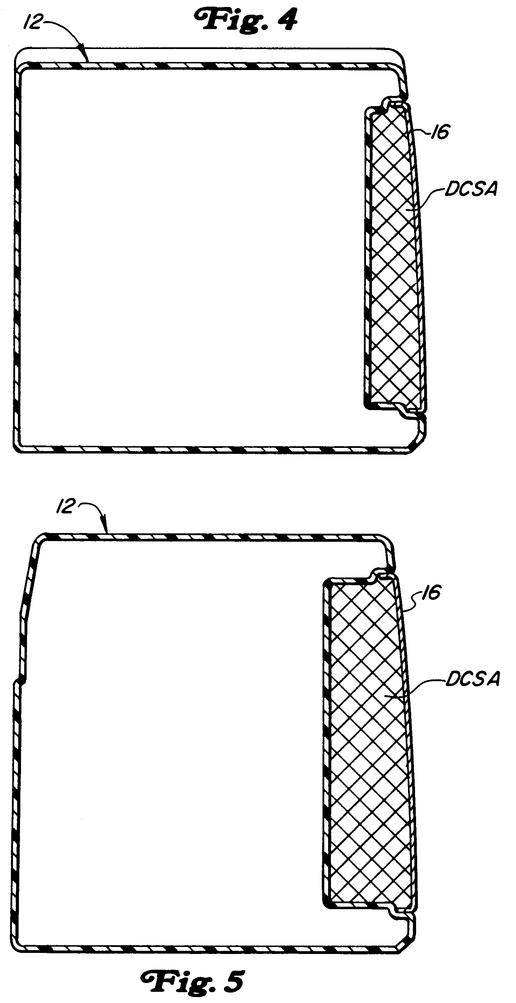

Aus den Fig. 2 und 3 geht das Lufteinzugssystem in der Draufsicht und in der Seitenansicht hervor. In der Fig. 3 sind Schnittlinien 4:4 bis 12:12 eingezeichnet. Die entsprechenden Schnittbilder finden sich in den Fig. 4 bis 12, und der entsprechende DCSA bzw. offene Einströmungsquerschnitt des Leitungssystems 18 ist in diesen Figuren durch eine Kreuzschraffierung gekennzeichnet. Die entsprechenden bzw. zugehörigen Einströmflächen SCSA ergeben sich aus Fig. 3 und sind die entsprechenden Siebflächen zwischen den Schnittlinien und dem dem Auslaß 12 abgelegenen Ende 28 des Siebgitters 16 multipliziert mit 36%. Eines der beim bevorzugten Ausführungsbeispiel angestrebten Ziele besteht darin, daß das Verhältnis von DCSA zu SCSA über die gesamte Siebgitterlänge an den verschiedensten Stellen immer 1:1 oder etwa 1:1 beträgt. Das ideale 1:1 Verhältnis ist allerdings nicht immer oder bei ungünstigeren Bedingungen in den wenigsten Fällen zu erreichen, da der Bereich hinter dem Siebgitter durch Fahrzeugkomponenten eingeengt ist. Andererseits läßt sich auch die Breite und Höhe des Fahrzeugs 10 aus den verschiedensten Gründen nicht beliebig verändern, so daß auch die Länge und Höhe des Einzugssystems 12 vorherbestimmt ist. Aus ästhetischen Gründen und / oder Sicherheitsaspekten ist auch die Form des Siebgitters nicht beliebig veränderbar. Hieraus ergibt sich zwangsläufig, daß der Einströmungsquerschnitt des Leitungssystems 18 in bestimmten Bereichen nicht optimal gestaltet werden kann bzw. kleiner als der Idealzustand ist.

Zu den Fahrzeugkomponenten, die das ideale 1:1 Verhältnis beeinträchtigen können, gehören beispielsweise der Fahrzeugrahmen, ein Überschlagschutz, Leitungen für hydraulische Flüssigkeit, Hydraulikventile, der Einfüllstutzen für den Brennstofftank oder das Gehäuse für das Motorgebläse.

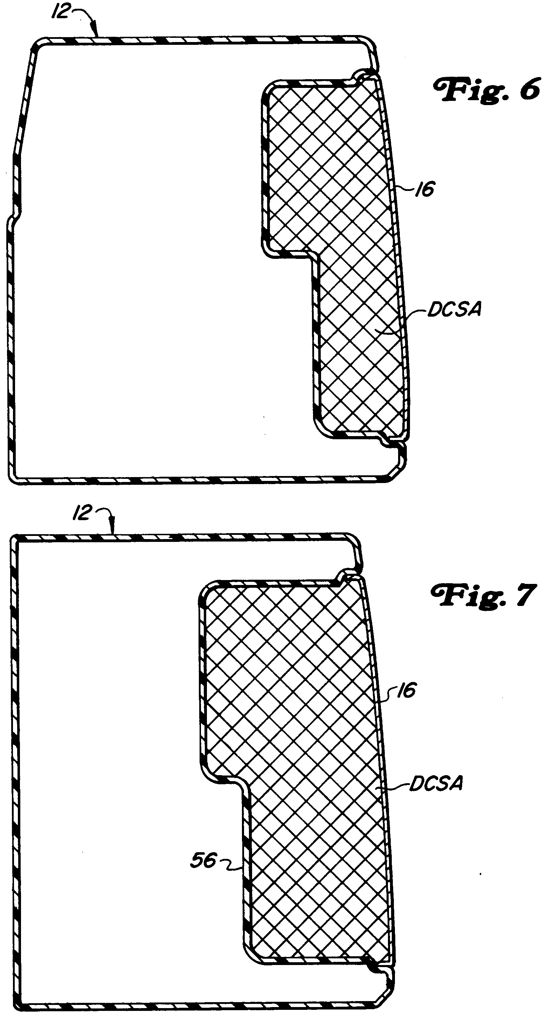

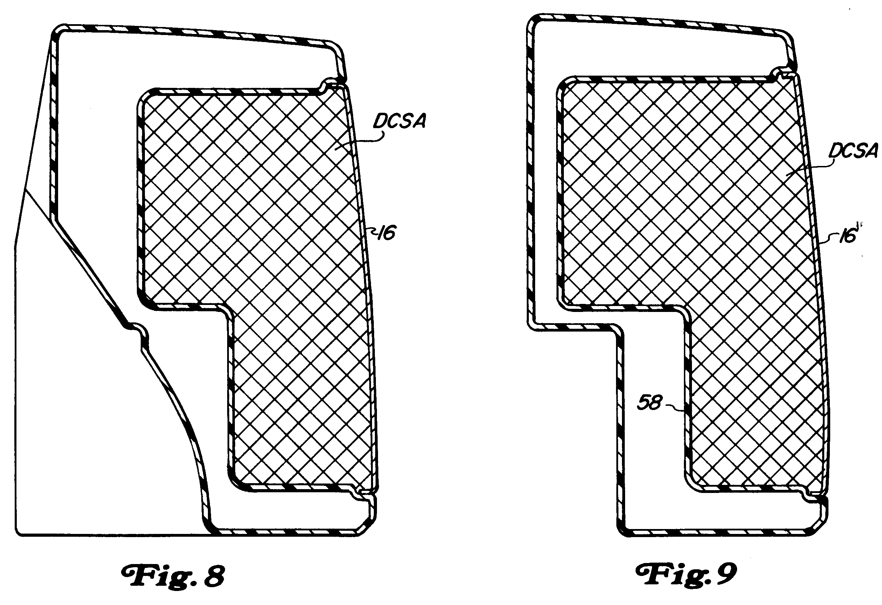

Um das angestrebte 1:1 Verhältnis in einfacher Weise konstruieren zu können, kann der Einströmungsquerschnitt DCSA des Leitungssystems 18 des Einzugssystems 12 in jeweils 100 mm Abständen festgelegt werden. Diese Abstände entsprechen in etwa den Zwischenräumen zwischen den einzelnen Schnittlinien 4:4 bis 12:12 in Fig. 3. Es wurde bereits darauf hingewiesen, daß die zugehörigen Schnittbilder sich auf die Fig. 4 bis 12 beziehen. Allerdings werden nachfolgend nicht alle Fig. 4 bis 12 diskutiert, um die beim bevorzugten Ausführungsbeispiel im Hinblick auf die den Einströmungsquerschnitt DCSA beeinträchtigenden Fahrzeugkomponenten erreichten Verhältniszahlen aufzuzeigen, wobei sich der Einströmungsquerschnitt DCSA an einer bestimmten Stelle des Leitungssystems 18 aus dem Produkt von der effektiven Höhe und der effektiven Breite des dortigen Freiraums hinter dem Sieb und der Einströmfläche SCSA des Siebes 16 aus 36% der Siebfläche zwischen dem in Bezug genommenen Einströmungsquerschnitt und dem dem Auslaß abgelegenen Ende des Siebgitters ergibt. Unter Bezugnahme auf Fig. 3, die dortige Schnittlinie 5:5 und auf die Fig. 5 ergibt sich, daß der Einströmungsquerschnitt DCSA in Fig. 5 bzw. die dort zu erkennende Kreuzschraffierung etwa rechteckig ist. Der schraffierte Freiraum ist nicht durch Fahrzeugkomponenten eingeengt und beträgt 9 950 mm². Die zugehörige Einströmfläche SCSA zwischen der Schnittlinie 5:5 und dem Endteil 28 des Siebes 16 beträgt 9 955 mm². Hieraus ergibt sich ein DCSA zu SCSA Verhältnis von 0,999 an der Schnittlinie 5:5. Aus Fig. 6, die den Schnitt 6:6 in Fig. 3 zeigt, ist zu ersehen, daß die Kreuzschraffierung in ihrem unteren Bereich eingeschnürt ist, d. h. der untere Bereich hat eine geringere Breite und liegt also dichter am Sieb als der obere Bereich der Kreuzschraffierung, um für die Anordnung von Steuerventilen entsprechenden Platz zu schaffen. An der Schnittlinie 6:6 beträgt der Einströmungsquerschnitt DCSA 12 340 mm² und die Einströmfläche SCSA 17 258 mm², so daß sich als entsprechendes Verhältnis 0,715 ergibt. Da der Fahrzeugrahmen und der Überschlagschutz das Leitungssystem 18 an den Schnittlinien 7:7 und 8:8, deren Schnittbilder in den Fig. 7 und 8 gezeigt sind, einengen, ergeben sich in diesen Bereichen Verhältniszahlen von DCSA zu SCSA von 0,895 bzw. von 0,813. An der Schnittlinie 9:9 ist der Freiraum durch den Fahrzeugrahmen wieder stärker beeinträchtigt. Der untere Bereich 58 des Leitungssystems liegt beträchtlich dichter am Sieb als der obere Bereich und es ergibt ein Verhältnis von DCSA zu SCSA von 0,738. Dennoch ist der Einströmungsquerschnitt DCSA des Leitungssystems an der Schnittstelle 9:9 noch ausreichend, so daß sich auch an dieser Stelle keine nennenswerte Anhäufung von Fremdmaterial an dem Sieb feststellen läßt.

Bei dem bevorzugten Ausführungsbeispiel wird die Luft von dem Auslaß 20 an dem linken Ende 36 des Einzugssystems 12 durch das Sieb gesaugt. Natürlich wäre es vorteilhafter, den Auslaß nicht an einem Ende sondern zentral in der Mitte anzuordnen, damit Luft gleichmäßig von den beiden Endabschnitten 26 und 28 des Siebes 16 eingesaugt werden kann. Diese Ideallage ist aber aus den verschiedensten Gründen nicht erreichbar, und Fahrzeugkomponenten und andere Konstruktionsauflagen legen die Anordnung des Auslasses an einem rückwärtigen Ende 36 des Einlaßsystems bzw. des Leitungssystems 18 nahe.

Wäre die Leitfläche 38 nicht vorgesehen, so würde das Gebläse sich unmittelbar vor dem Auslaß befindliche Luft schneller durch das Sieb einsaugen und hier eine größere Durchflußrate erzeugen als an den verbleibenden Siebflächen. Die Leitfläche an sich dagegen bewirkt, daß Luft von dem vor dem Auslaß gelegenen Abschnitt des Siebes grundsätzlich zunächst zur Siebmitte und dort durch das Sieb gesaugt wird. Auf diese Weise wird Luft tatsächlich von jeder Endseite des Siebes angesaugt. Dabei ist es zum Erreichen einer gleichmäßigen Durchflußrate wünschenswert, daß das Verhältnis von Einströmungsquerschnitt DCA vor der Leitfläche und hinter dem Sieb zu der Einströmfläche SCSA des Siebes wieder 1:1 beträgt oder diesem Verhältnis weit angenähert ist.

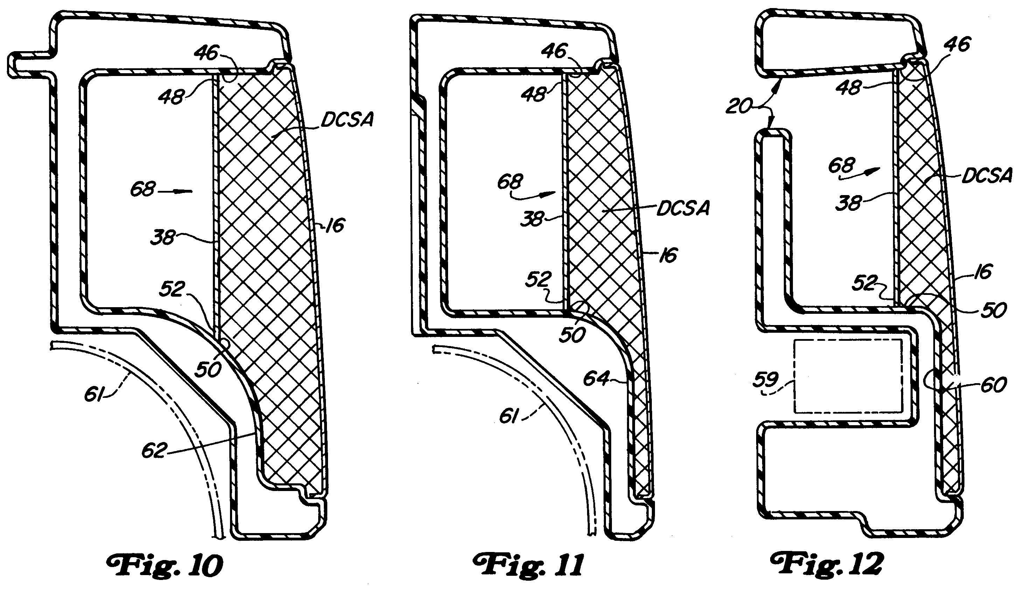

Andererseits liegen im rückwärtigen Bereich des Lufteinzugssystems 12, was in etwa dem Bereich hinter der Schnittlinie 9:9 in Fig. 3 bzw. den Schnittbildern in den Fig. 10 bis 12 entspricht, erheblich mehr oder mehr Raum einnehmende Fahrzeugkomponenten, wie der Fahrzeugrahmen 59 hinter der Wand 60 in Fig. 12, die Gebläseseite 61 hinter der Wand 62 in den Fig. 11 und 12, oder der sich ebenfalls in diesem Bereich befindliche Einfüllstutzen für den Brennstofftank. Natürlich verschlechtert sich in diesen Bereichen das Idealverhältnis von DCSA zu SCSA, im Bereich der Schnittlinie 10:10 sinkt es auf 0,502. Infolgedessen muß die Durchflußrate durch den Siebabschnitt vor der Leitfläche 38, d. h. etwa im Bereich zwischen der Schnittlinie 10:10 in Fig. 3 und dem linken Ende 26 des Siebgitters 16, wieder beschleunigt werden, um eine Materialanhäufung auf dem Sieb vor der Leitfläche zu vermeiden. Um nun eine größere Durchflußrate von Luft zu erhalten, ist die Leitfläche 38 mit Durchgangsöffnungen 54 versehen. Da das Gebläse die Luft durch den Auslaß einsaugt, entsteht an der Rückseite 68 der Leitfläche ein geringerer Druck, so daß Luft durch die Durchgangsöffnungen zu der Seite mit dem geringeren Druck gelangt, wodurch die Durchflußrate durch das Sieb unmittelbar vor der Leitfläche erhöht wird. Auf diese Weise kann die Durchflußrate durch das Sieb unmittelbar vor der Leitfläche zu der Durchflußrate durch das Sieb auf dem verbleibenden Siebabschnitt gleichgestellt werden. Natürlich sind die Leitflächengröße, die Leitflächenlage, die Anzahl der Durchgangsöffnungen in der Leitfläche, die Lage und Größe der Durchgangsöffnungen variierbar, um genau die Durchflußrate zu erhalten, die in einer bestimmten Situation erwünscht oder erforderlich ist, um die Luftdurchflußrate über die gesamte Oberfläche des Siebes zu egalisieren.

Je ein Lufteinzugssystem 12 ist an jeder Fahrzeugseite vorgesehen und Luft wird über die gesamte Siebfläche angesaugt. Die Einströmfläche SCSA des Siebes 16 zwischen der Schnittlinie 4:4 in Fig. 3 und dem rechten Endabschnitt 28 des Siebes beträgt etwa 3 376 mm², während der Einströmungsquerschnitt des Leitungssystems 18 an der Schnittlinie 4:4 5 520 mm² beträgt. In Fig. 4 ist der zugehörige Einströmungsquerschnitt DCSA, durch den die durch die vorgenannte Einströmfläche angesaugte Luft durchtritt, in Kreuzschraffierung dargestellt. Durch das Sieb 16 zwischen der Schnittlinle 5:5 und dem rechten Endabschnitt 28 angesaugte Luft wird durch das Leitungssystem 18 an der Schnittlinie 5:5 durchtreten. Durch das Sieb 16 zwischen der Schnittlinie 6:6 und dem rechten Endabschnitt 28 angesaugte Luft wird dementsprechend an der Schnittlinie 6:6 durch das Leitungssystem strömen. Entsprechendes gilt für das Leitungssystem an den verbleibenden Schnittlinien. An jeder beliebigen Schnittstelle im Leitungssystem wird ein Verhältnis von Einströmungsquerschnitt DCSA zu Einströmfläche des Siebes SCSA von 1:1 angestrebt.

Aus der nachfolgenden Tabelle ergeben sich für die Schnittstellen 4:4 bis 9:9 in Fig. 3 die folgenden Werte:

| Schnitt | Einströmungsquerschnitt (DCSA) (mm²) | Lufteinströmfläche (SCSA) (mm²) | Verhältnis |
|---|---|---|---|
| 4:4 | 5 520 | 3 376 | 1,63 |
| 5:5 | 9 950 | 9 955 | 0,999 |
| 6:6 | 12 340 | 17 258 | 0,715 |
| 7:7 | 22 500 | 25 126 | 0,895 |
| 8:8 | 27 200 | 33 441 | 0,813 |
| 9:9 | 31 110 | 42 145 | 0,738 |

Aus der nachfolgenden zweiten Tabelle lassen sich für den Bereich vor der Leitfläche 38, d. h. im Bereich der Schnittstellen 10:10 bis 12:12 in Fig. 3 die folgenden Werte ablesen:

| Schnitt | Einströmungsquerschnitt (DCSA) (mm²⁾ | Lufteinströmfläche (SCSA) (mm²) | Verhältnis |
|---|---|---|---|
| 10:10 | 13 400 | 26 676 | 0,502 |
| 11:11 | 8 200 | 17 534 | 0,467 |
| 12:12 | 5 300 | 8 375 | 0,530 |

Um in diesen Bereichen auf beiden Seiten der Siebfläche ein ausgeglichenes Ergebnis bzw. Verhältnis von DCSA zu SCSA zu erhalten, sind in der Leitfläche die Durchgangsöffnungen 54 vorgesehen.

## Patentansprüche

1. Lufteinzugssystem für ein Fahrzeug (10) mit einem Siebgitter (16) und einem hinter dem Siebgitter (16) angeordneten und durch das Siebgitter (16) abgedeckten Luftleitungssystem (18) mit einem Luftauslaß (20), wobei das Siebgitter (16) eine Einströmfläche (SCSA), durch die Luft angesaugt wird, und das Luftleitungssystem (18) einen Einströmungsquerschnitt (DCSA) aufweist, gekennzeichnet durch eine derartige Gestaltung des Luftleitungssystems (18), daß der Einströmungsquerschnitt (DCSA) des Luftleitungssystems (18) an einer besonderen Stelle hinter dem Siebgitter (16) der Einströmfläche (SCSA) des Siebgitters (16) zwischen dieser Stelle und einem Ende des Siebgitters (16) entspricht bzw. angenähert ist.

2. Lufteinzugssystem nach Anspruch 1 mit einem ersten und einem zweiten zwischen sich das Siebgitter (16) aufnehmenden Endteil (26, 28), dadurch gekennzeichnet, daß der Luftauslaß (20) im Bereich des ersten Endteils (26) vorgesehen ist.

3. Lufteinzugssystem nach Anspruch 1, dadurch gekennzeichnet, daß das Siebgitter (16) mit Sieböffnungen (34) versehen ist, die 36% oder etwa 36% der Siebgitteroberfläche einnehmen.

4. Lufteinzugssystem nach einem oder mehreren der vorherigen Ansprüche, dadurch gekennzeichnet, daß das Luftleitungssystem (18) einen unregelmäßigen Querschnitt aufweist.

5. Lufteinzugssystem nach einem oder mehreren der vorherigen Ansprüche, dadurch gekennzeichnet, daß das Luftleitungssystem (18) aus einem Kunststoff besteht.

6. Lufteinzugssystem nach einem oder mehreren der vorherigen Ansprüche, dadurch gekennzeichnet, daß in dem Luftleitungssystem (18) eine Leitfläche (38) vorgesehen ist.

7. Lufteinzugssystem nach Anspruch 6, dadurch gekennzeichnet, daß die Leitfläche (38) zwischen einer Rückwand (40) des Luftleitungssystems (18) und dem Siebgitter (16) vorgesehen ist.

8. Lufteinzugssystem nach den Ansprüchen 2 und 6, dadurch gekennzeichnet, daß die Leitfläche (38) mit ihrem einen Ende dem Auslaß (20) zugelegen ist.

9. Lufteinzugssystem nach einem oder mehreren der Ansprüche 6 bis 8, dadurch gekennzeichnet, daß die Leitfläche (38) mit einer Vielzahl von Durchgangsöffnungen (54) versehen ist.

10. Lufteinzugssystem nach einem oder mehreren der vorherigen Ansprüche, dadurch gekennzeichnet, daß der Einströmungsquerschnitt (DCSA) des Luftleitungssystems (18) sich in Richtung auf seinen Luftauslaß (20) ständig vergrößert, sofern er nicht durch ihn einschnürende Fahrzeugbauteile daran gehindert ist.

11. Lufteinzugssystem insbesondere nach den Ansprüchen 6 und 10, dadurch gekennzeichnet, daß die Leitfläche (38) im Luftleitungssystem (18) oberhalb von das Luftleitungssystem einschnürenden Bauteilen vorgesehen ist.
